# FASCICULE DE BREVET EUROPEEN

(11) **EP 3 004 550 B1**
(45) Date de publication et mention de la délivrance du brevet: **09.09.2020**
(21) Numéro de dépôt: 14742261.2
(22) Date de dépôt: 06.06.2014
(51) Int. Cl.: F01B 9/06, F16H 25/12, F02B 75/32

(54) **DISPOSITIF DE TRANSFORMATION DE MOUVEMENT ET PROCÉDÉ CORRESPONDANT**
VORRICHTUNG ZUM UMWANDELN EINER BEWEGUNG UND ENTSPRECHENDES VERFAHREN
DEVICE FOR CONVERTING MOVEMENT AND CORRESPONDING METHOD

(30) Priorité: 07.06.2013 FR 1355274
(43) Date de publication de la demande: 13.04.2016
(73) Titulaire: Daouk, Antar, 75016 Paris (FR)
(72) Inventeur: Daouk, Antar, 75016 Paris (FR)
(74) Mandataire: Weber, Jean-François
(86) Numéro de dépôt international: PCT/FR2014/051367
(87) Numéro de publication internationale: WO 2014/195656

(56) Documents cités:
- WO-A1-2007/053857
- GB-A- 2 075 594
- GB-A- 2 424 455
- US-A1- 2011 277 732

## Description

### DOMAINE TECHNIQUE

La présente invention se rapporte au domaine technique général de la transformation de mouvement, et notamment de la transformation d'un mouvement de va-et-vient en un mouvement de rotation synchrone, susceptible notamment d'être utilisé dans un moteur dont le fonctionnement est basé sur le déplacement alternatif d'un ou plusieurs pistons, un tel moteur fournissant un travail utilisable par exemple pour propulser un véhicule (automobile, motocyclette, aéronef, bateau, etc.), pour animer une machine (industrielle ou agricole par exemple) ou encore pour fournir de l'énergie mécanique à un dispositif de conversion d'énergie, tel qu'un groupe électrogène.

L'invention concerne plus précisément un dispositif de transformation d'un mouvement alternatif en un mouvement de rotation comprenant un élément d'entrée et un élément de sortie conçus pour se déplacer, sous l'effet de l'exercice intermittent d'une force motrice externe sur ledit élément d'entrée, selon respectivement un mouvement alternatif et un mouvement de rotation, lesdits éléments d'entrée et de sortie étant pourvus de moyens de transmission d'effort respectifs interagissant mécaniquement en une zone de transmission d'effort pour au moins transformer le déplacement alternatif dudit élément d'entrée en rotation continue dudit élément de sortie selon un axe de rotation.

L'invention concerne également un moteur thermique incluant un tel dispositif de transformation d'un mouvement alternatif en un mouvement de rotation, ainsi qu'un véhicule équipé d'un tel moteur.

L'invention concerne enfin un procédé de transformation d'un mouvement alternatif en mouvement de rotation dans lequel un élément d'entrée et un élément de sortie se déplacent, sous l'effet de l'exercice intermittent d'une force motrice externe sur ledit élément d'entrée, selon respectivement un mouvement alternatif et un mouvement de rotation, lesdits éléments d'entrée et de sortie étant pourvus de moyens de transmission d'effort respectifs interagissant mécaniquement en une zone de transmission d'effort pour au moins transformer le déplacement alternatif dudit élément d'entrée en rotation continue dudit élément de sortie selon un axe de rotation.

### TECHNIQUE ANTERIEURE

Les moteurs à combustion internes, habituellement désignés par l'appellation «*moteur à explosion*» sont connus de longue date et largement répandus, puisqu'ils équipent l'immense majorité des voitures automobiles, pour ne citer que ce type d'engin motorisé.

Les moteurs à combustion internes les plus répandus sont les moteurs «à *quatre temps*», dont l'architecture est généralement basée sur la mise en œuvre d'un cylindre fermé dans sa partie supérieure par une culasse. Le cylindre et la culasse forment une chambre de combustion dont le volume est réglé par la course d'un piston coulissant dans le cylindre selon un mouvement de va-et-vient rectiligne imparti par les variations de pression résultant des cycles de combustion opérés dans la chambre de combustion. Le piston est lui-même relié à un vilebrequin, par l'intermédiaire d'une bielle, pour transformer le mouvement alternatif de translation rectiligne du piston en mouvement de rotation synchrone uniforme du vilebrequin et réciproquement. Cette architecture de moteur classique donne globalement satisfaction, mais n'en présente pas moins de sérieux inconvénients.

En effet, la présence d'une culasse rapportée sur le cylindre est susceptible d'entraîner des problèmes de fiabilité (en particulier au niveau du joint de culasse). La mise en œuvre d'une culasse et du joint correspondant limite en outre nécessairement le taux de compression du moteur, puisqu'un taux de compression élevé ou très élevé serait susceptible de générer une détérioration du joint de culasse. De plus, ces moteurs connus mettent en œuvre une chaîne mécanique et cinématique relativement lourde et complexe de renvoi d'effort entre le vilebrequin, l'arbre à cames (lequel est généralement déporté) qui pilote les soupapes et les soupapes, ce qui constitue une source potentielle de défaillances et de perte de rendement énergétique, et ne va pas dans le sens d'une augmentation de la fiabilité ni d'une réduction du prix de revient. Enfin, ces moteurs connus mettent généralement en œuvre un grand nombre de pièces en mouvement, ce qui correspond à une masse en mouvement importante, susceptible là encore d'engendrer des problèmes d'efficacité et de fiabilité.

Ces moteurs classiques s'avèrent également être relativement lourds et encombrants, de sorte que leur implantation au sein d'un véhicule, et notamment au sein d'un véhicule automobile du genre voiture particulière, peut s'avérer problématique.

Afin de remédier à ces différents inconvénients, le demandeur a proposé un nouveau moteur comprenant au moins un piston et un arbre de sortie monté coaxialement audit piston, l'arbre de sortie et le piston coopérant, par l'intermédiaire d'un système de came, pour convertir le mouvement alternatif du piston en mouvement rotatif de l'arbre de sortie. Le système de came en question comprend d'une part une gorge sinusoïdale ménagée sur l'arbre de sortie et d'autre part un doigt de came qui est solidaire du piston et qui engage ladite gorge. Grâce à ce système de came à transmission axiale, le mouvement de va-et-vient du piston est imparti au doigt de came qui vient exercer une poussée axiale sur les parois de la gorge, entraînant ainsi la rotation synchrone de l'arbre de sortie.

Le recours à un tel système de transformation de mouvement, fondé en l'espèce sur une came à transmission axiale, s'est avéré très bénéfique en permettant d'obtenir une architecture de moteur particulièrement simple, légère, fiable et compacte.

Il n'en reste pas moins qu'un tel dispositif de transformation de mouvement, dont la mise en œuvre n'est d'ailleurs absolument pas limitée à un moteur à combustion interne et peut concerner bien d'autres applications, pouvait encore être optimisé, notamment sur le plan du rendement énergétique.

Le document GB-2 424 455 A décrit un dispositif correspondant au préambule de la revendication 1.

### EXPOSE DE L'INVENTION

L'invention vise en conséquence à porter remède aux différents inconvénients énumérés précédemment et à proposer un nouveau dispositif de transformation d'un mouvement alternatif en un mouvement de rotation présentant un rendement optimisé tout en étant de construction particulièrement simple et fiable, avec un niveau de vibrations minimal.

Un autre objet de l'invention vise à proposer un nouveau dispositif de transformation d'un mouvement alternatif en un mouvement de rotation particulièrement compact, et qui évite la mise en œuvre de renvois d'effort ou de pièces de transmission déportées.

Un autre objet de l'invention vise à proposer un nouveau dispositif de transformation d'un mouvement alternatif en un mouvement de rotation de construction extrêmement robuste et bon marché.

Un autre objet de l'invention vise à proposer un nouveau dispositif de transformation d'un mouvement alternatif en un mouvement de rotation qui met en œuvre un minimum de pièces différentes.

Un autre objet de l'invention vise à proposer un nouveau moteur thermique permettant, à cylindrée et vitesse de piston identiques, de fournir une puissance beaucoup plus importante que celle fourni par un moteur de l'art antérieur, et de bénéficier d'un rendement amélioré par rapport à un tel moteur de l'art antérieur.

Un autre objet de l'invention vise également à proposer un nouveau procédé de transformation d'un mouvement alternatif en un mouvement de rotation qui présente un rendement optimisé tout en étant extrêmement simple, rapide et bon marché à mettre en œuvre.

Les objets assignés à l'invention sont atteints à l'aide d'un dispositif de transformation d'un mouvement alternatif en un mouvement de rotation comprenant un élément d'entrée et un élément de sortie conçus pour se déplacer, sous l'effet de l'exercice intermittent d'une force motrice externe sur ledit élément d'entrée, selon respectivement un mouvement alternatif et un mouvement de rotation, lesdits éléments d'entrée et de sortie étant pourvus de moyens de transmission d'effort respectifs interagissant mécaniquement en une zone de transmission d'effort pour au moins transformer le déplacement alternatif dudit élément d'entrée en rotation continue dudit élément de sortie selon un axe de rotation, ledit dispositif étant caractérisé en ce qu'il est conçu pour que la distance entre ledit axe de rotation et ladite zone de transmission d'effort varie automatiquement de façon à être plus importante lorsque ladite force motrice externe s'exerce sur ledit élément d'entrée que lorsque ladite force motrice externe ne s'exerce pas sur ledit élément d'entrée.

Les objets assignés à l'invention sont également atteints à l'aide d'un procédé de transformation d'un mouvement alternatif en mouvement de rotation dans lequel un élément d'entrée et un élément de sortie se déplacent, sous l'effet de l'exercice intermittent d'une force motrice externe sur ledit élément d'entrée, selon respectivement un mouvement alternatif et un mouvement de rotation, lesdits éléments d'entrée et de sortie étant pourvus de moyens de transmission d'effort respectifs interagissant mécaniquement en une zone de transmission d'effort pour au moins transformer le déplacement alternatif dudit élément d'entrée en rotation continue dudit élément de sortie selon un axe de rotation, ledit procédé étant caractérisé en ce que la distance entre ledit axe de rotation et ladite zone de transmission d'effort varie automatiquement de façon à être plus importante lorsque ladite force motrice externe s'exerce sur ledit élément d'entrée que lorsque ladite force motrice externe ne s'exerce pas sur ledit élément d'entrée.

### DESCRIPTIF SOMMAIRE DES DESSINS

D'autres objets et avantages de l'invention apparaîtront plus en détails à la lecture de la description qui suit, en référence aux dessins annexés, donnés à titre purement illustratif et non limitatif, dans lesquels :

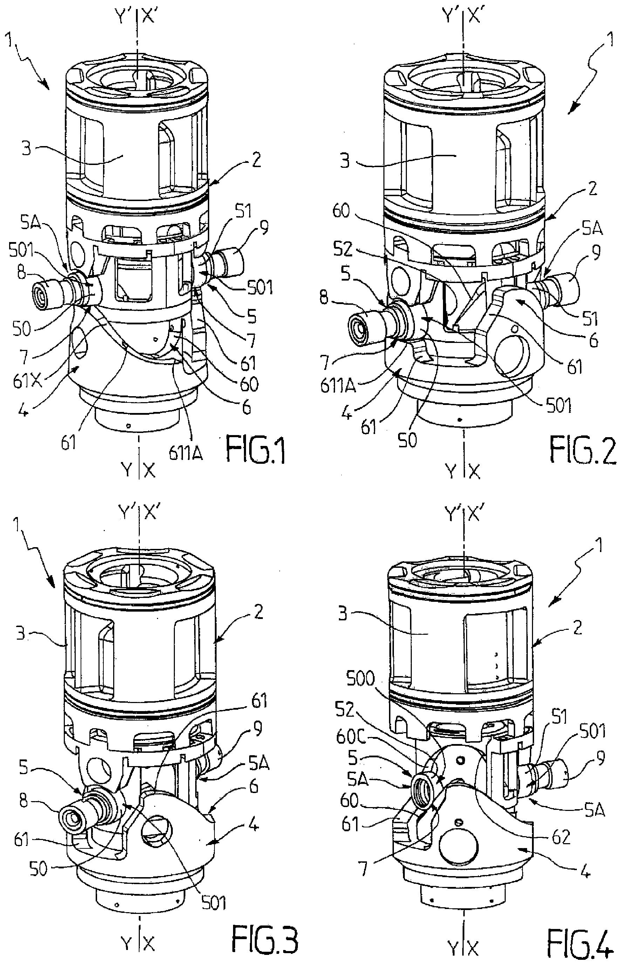

- La figure 1 illustre, selon une vue schématique de face en perspective, un dispositif de transformation d'un mouvement alternatif en un mouvement de rotation conforme à l'invention, le dispositif en question étant en l'espèce adapté pour être mis en oeuvre dans un moteur à combustion interne fonctionnant selon un cycle à quatre temps, de manière à transformer le mouvement de va-et-vient rectiligne d'un piston du moteur en mouvement de rotation uniforme d'un arbre récepteur du moteur, le dispositif se trouvant dans une configuration correspondant au début du temps moteur dudit moteur à quatre temps.
- La figure 2 illustre, selon une vue schématique de face en perspective, le dispositif de transformation de la figure 1 alors que ce dernier se trouve dans une configuration correspondant à la fin du temps moteur.
- La figure 3 illustre, selon une vue schématique de face en perspective, le dispositif des figures 1 et 2 alors que le moteur se trouve dans son temps d'échappement.
- La figure 4 est une vue du dispositif de la figure 3 avec certaines pièces omises de façon à pouvoir visualiser la zone de transmission d'effort du dispositif alors que le moteur associé se trouve dans son temps d'échappement.
- Les figures 5 et 6 illustrent l'élément de sortie du dispositif des figures 1 à 4 vu selon deux points de vue différents.
- La figure 7 illustre, selon une vue schématique de dessus, la projection, dans un plan perpendiculaire à l'axe de rotation de l'élément de sortie, d'un chemin de came faisant partie des moyens de transmission d'effort équipant ledit élément de sortie.
- La figure 8 illustre, selon une vue de face, l'élément de sortie du dispositif des figures 1 à 4.
- La figure 9 illustre, selon une vue de dessous, l'élément de sortie de la figure 8.

### MEILLEURE MANIERE DES REALISER L'INVENTION

L'invention concerne en premier lieu un dispositif 1 de transformation d'un mouvement alternatif en un mouvement de rotation. Le dispositif 1 est plus précisément un dispositif mécanique permettant de générer une rotation en réponse à un mouvement de va-et-vient.

Un tel dispositif de transformation de mouvement peut bien entendu être mis en œuvre dans des applications très diverses, notamment dans le domaine de l'industrie (machines-outils) que du transport (moteur). De préférence, le dispositif 1 selon l'invention est destiné à être mis en œuvre dans un moteur thermique, pour relier un piston dudit moteur, animé d'un mouvement de va-et-vient, à un arbre récepteur animé d'un mouvement de rotation uniforme. L'invention n'est cependant absolument pas limitée à une telle application ni même d'ailleurs à un type de moteur particulier. Par *«moteur*», on entend ainsi désigner ici tout dispositif capable de fournir un travail mécanique utilisable notamment pour propulser un véhicule, et par exemple un véhicule automobile, une motocyclette, un aéronef ou un bateau, ou encore pour faire fonctionner une machine (machine-outil, machine de travaux publics, machine agricole, pompe, compresseur...) ou un dispositif de conversion énergétique, tel qu'un générateur ou un dispositif permettant de récupérer de l'énergie de freinage.

De préférence, le moteur dans lequel est avantageusement mis en œuvre le dispositif 1 selon l'invention est un moteur thermique à combustion interne («*moteur à explosion*»), c'est-à-dire un moteur capable de produire de l'énergie mécanique à partir de la combustion en son sein d'un fluide de travail contenant un carburant, et par exemple un carburant à base d'hydrocarbure tel que de l'essence. L'invention n'est cependant pas limitée à un moteur à combustion et peut concerner un moteur dont le fonctionnement n'est pas directement basé sur la combustion d'un carburant, comme c'est le cas par exemple des moteurs à air comprimé.

Avantageusement, le dispositif 1 présente un fonctionnement réciproque, c'est-à-dire qu'il est capable également de transformer un mouvement de rotation continue en mouvement alternatif.

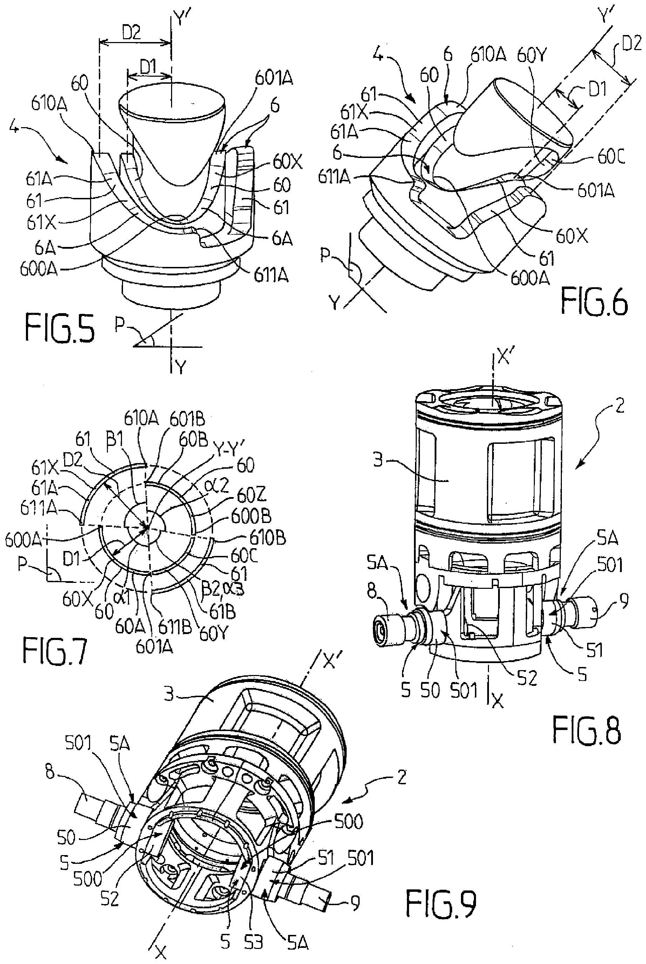

Le dispositif 1 comprend un élément d'entrée 2 (représenté seul sur les figures 8 et 9) formé par exemple, dans l'application illustrée aux figures, par un piston contribuant à délimiter une chambre de combustion d'un moteur thermique. Le piston en question présente ainsi avantageusement un corps sensiblement cylindrique 3 destiné à coulisser au sein d'un cylindre (non représenté) de façon à former avec ce dernier une chambre de combustion interne de moteur thermique. Le dispositif 1 comprend également un élément de sortie 4 (illustré seul aux figures 5 et 6) qui est par exemple formé, dans l'application illustrée aux figures, par un arbre récepteur dont est pourvu ledit moteur thermique. L'arbre récepteur en question peut par exemple servir à entraîner les roues d'un véhicule terrestre ou tout autre moyen de propulsion (hélice d'un aéronef, turbine, etc.).

Conformément à l'invention, l'élément d'entrée 2 et l'élément de sortie 4 sont conçus pour se déplacer, sous l'effet de l'exercice intermittent d'une force motrice externe sur ledit élément d'entrée 2, selon respectivement un mouvement alternatif et un mouvement de rotation. L'élément d'entrée 2 est ainsi conçu pour se déplacer selon un mouvement de va-et-vient, entre deux positions extrémales. De préférence, l'élément d'entrée 2 est conçu pour se déplacer selon un mouvement de va-et-vient rectiligne, parallèlement à un axe de translation X-X'.

Un tel mouvement de coulissement alternatif permet, dans le cas où l'élément d'entrée 2 est formé par un piston d'un moteur thermique, de faire varier le volume de la chambre de combustion de ce dernier par déplacement du piston au sein du cylindre, comme cela est bien connu en tant que tel. Dans ce mode de réalisation préférentiel, l'élément d'entrée 2 est guidé à coulissement rectiligne relativement à un bâti, afin de préférence d'empêcher toute rotation sur lui-même dudit élément d'entrée 2. Par exemple, dans le cas illustré aux figures où l'élément d'entrée 2 forme le piston d'un moteur thermique, le dispositif 1 comprend avantageusement des pions de guidage 8, 9 conçus pour coulisser de façon ajustée dans des gorges longitudinales complémentaires respectives ménagées dans le cylindre, afin de permettre un mouvement de va-et-vient rectiligne de l'élément d'entrée 2 tout en interdisant une éventuelle rotation sur lui-même dudit élément d'entrée 2. L'invention n'est cependant pas limitée à un élément d'entrée 2 conçu pour se déplacer selon un mouvement de va-et-vient rectiligne, et il est par exemple parfaitement envisageable que l'élément d'entrée 2 soit conçu pour se déplacer selon un mouvement de va-et-vient rotatif (mouvement pendulaire) sans pour autant que l'on sorte du cadre de l'invention.

L'élément de sortie 4 est quant à lui conçu pour tourner, de préférence de façon continue et concomitante avec le déplacement alternatif de l'élément d'entrée 2, autour d'un axe de rotation Y-Y'. De préférence, ledit élément de sortie 4 est plus précisément conçu pour tourner sur lui-même selon ledit axe de rotation Y-Y'. Dans le cas illustré aux figures, concernant un moteur thermique pourvu d'un arbre récepteur formant l'élément de sortie 4, ledit axe de rotation Y-Y' correspond donc à l'axe de rotation dudit arbre récepteur. De préférence, lesdits axe de rotation Y-Y' et axe de translation X-X' sont sensiblement parallèles, et de préférence (comme illustré aux figures) sensiblement confondus. Dans ce cas de figure, qui permet en l'espèce d'obtenir un moteur particulièrement compact, robuste et efficace, le piston formant l'élément d'entrée 2 coulisse parallèlement à l'axe de rotation de l'arbre récepteur formant l'élément de sortie 4, ledit axe de rotation correspondant également de préférence à l'axe de symétrie dudit piston. Il est cependant tout à fait envisageable, sans pour autant que l'on sorte du cadre de l'invention, que l'axe de rotation Y-Y' et l'axe de translation X-X' soient sécants, et par exemple perpendiculaires, comme c'est le cas dans les moteurs thermiques d'architecture classique, où le piston (élément d'entrée) coulisse selon un axe de translation qui est sensiblement perpendiculaire à l'axe de rotation du vilebrequin (élément de sortie).

Comme exposé précédemment, l'élément d'entrée 2 et l'élément de sortie 4 se déplacent tout deux, de manière concomitante, sous l'effet de l'exercice intermittent sur ledit élément d'entrée 2 d'une force motrice externe, c'est-à-dire d'une force motrice qui est extérieure au dispositif 1 en tant que tel. Cela signifie que le dispositif 1 est spécifiquement agencé pour que la soumission, à intervalles de temps réguliers, de l'élément d'entrée 2 à une sollicitation mécanique extérieure (correspondant à ladite force motrice externe) génère en retour à la fois le déplacement alternatif de l'élément d'entrée 2 et la rotation simultanée de l'élément de sortie 4. Dans l'exemple illustré aux figures, où l'élément d'entrée 2 est formé par un piston contribuant à délimiter une chambre de combustion d'un moteur thermique au sein de laquelle a lieu une combustion cyclique d'un fluide de travail (mélange gazeux carburant/air par exemple), ledit exercice intermittent de ladite force motrice externe résulte en l'espèce de ladite combustion cyclique. En d'autres termes, dans l'application préférentielle illustrée aux figures, où le dispositif 1 fait partie d'un moteur thermique, l'exercice intermittent de la force motrice externe mettant en mouvement l'élément d'entrée 2 et l'élément de sortie 4 résulte des opérations de combustion qui se déroulent périodiquement (par exemple lors de chaque temps moteur s'il s'agit d'un moteur à quatre temps) dans la chambre de combustion, lors du fonctionnement du moteur. La combustion du gaz formant avantageusement le fluide de travail génère par exemple une détente subite dudit gaz au sein de la chambre de combustion, le gaz ainsi violemment dilaté exerçant alors une poussée axiale (de direction X-X') sur le piston formant en l'espèce l'élément d'entrée 2. La force motrice externe susvisée correspond ainsi de préférence à la force exercée à intervalles réguliers par la détente du mélange air-carburant enflammé au sein de la chambre de combustion du moteur thermique pourvu du dispositif 1. Conformément à l'invention, les éléments d'entrée 2 et de sortie 4 sont pourvus de moyens de transmission d'efforts respectifs 5, 6 interagissant mécaniquement en une zone de transmission d'effort 7 pour au moins transformer le déplacement alternatif dudit élément d'entrée 2 en rotation continue dudit élément de sortie 4 selon l'axe de rotation Y-Y'.

Ainsi, l'élément d'entrée 2 est pourvu d'un moyen de transmission d'efforts qui coopère avec un moyen de transmission d'efforts complémentaire dont est pourvu l'élément de sortie 4, cette coopération mécanique permettant au moins d'impartir à l'élément de sortie 4 à un mouvement de rotation selon l'axe de rotation Y-Y' en réponse au déplacement alternatif de l'élément d'entrée 2. L'interaction mécanique entre lesdits moyens de transmission d'efforts s'effectue en une zone de transmission d'effort 7 qui correspond à l'endroit où le moyen de transmission d'effort dont est pourvu l'élément d'entrée 2 exerce une force sur le moyen de transmission d'effort dont est pourvu l'élément de sortie 4 et réciproquement, afin de réaliser une liaison cinématique entre l'élément d'entrée 2 et l'élément de sortie 4. De préférence, ladite zone de transmission d'effort 7 correspond donc à l'endroit où lesdits moyens de transmission d'efforts 5, 6 dont sont respectivement pourvus les éléments d'entrée 2 et de sortie 4 sont en contact, et de préférence en contact direct, pour générer une coopération de forces entre eux.

Conformément à l'invention, le dispositif 1 est conçu pour que la distance entre l'axe de rotation Y-Y' et la zone de transmission d'effort 7 varie automatiquement de façon à être plus importante lorsque ladite force motrice externe s'exerce sur ledit élément d'entrée 2 que lorsque ladite force motrice externe ne s'exerce pas sur ledit élément d'entrée 2. L'invention repose ainsi sur l'idée de faire varier la distance entre l'axe de rotation Y-Y' de l'élément de sortie 4 et l'endroit où s'exerce l'effort de mise en rotation de l'élément de sortie 4 (par l'intermédiaire de la coopération des moyens de transmission d'efforts 5, 6), selon que l'élément d'entrée 2 est ou non soumis à la force motrice externe (qui s'exerce uniquement de façon intermittente). L'invention repose plus précisément sur l'idée d'accroître cette distance entre la zone de transmission d'effort 7 et l'axe de rotation X-X' lorsque l'élément d'entrée 2 est soumis à ladite force motrice externe, ce qui permet d'accroître le couple exercé sur l'élément de sortie 4. En revanche, lorsque l'élément d'entrée 2 n'est pas soumis à ladite force motrice externe, la zone de transmission d'effort 7 est avantageusement approchée au plus près de l'axe de rotation Y-Y', de façon à minimiser le couple dans les phases non motrices, c'est-à-dire les phases où l'élément d'entrée 2 n'est pas soumis à la force motrice externe, de sorte que le déplacement de l'élément d'entrée 2 est purement inertiel et est opéré grâce à l'énergie cinétique acquise par l'élément d'entrée 2 lors de la phase motrice susvisée, pendant laquelle l'élément d'entrée 2 est soumis à la force motrice externe. L'invention permet donc de maximiser le couple dans les phases motrices et de le réduire dans les phases non motrices, conduisant ainsi à un rendement optimal. L'invention est ainsi particulièrement adaptée pour être mise en œuvre au sein d'un moteur thermique à quatre temps, puisqu'elle permet d'augmenter le couple produit sur l'arbre récepteur pendant le temps moteur (combustion et détente) et au contraire de le réduire pendant les temps non moteurs (admission, compression, échappement), améliorant ainsi le rendement dudit moteur.

En l'espèce, la distance entre la zone de transmission d'effort 7 et l'axe de rotation Y-Y' varie automatiquement de façon à être plus importante pendant sensiblement toute la durée de l'application de la force motrice externe sur l'élément d'entrée 2 (c'est-à-dire pendant le temps moteur) que pendant sensiblement toute la durée où la force motrice externe ne s'applique pas sur l'élément d'entrée 2 (c'est-à-dire pendant les temps non moteurs).

Ainsi, la distance entre la zone de transmission d'effort 7 et l'axe de rotation Y-Y' est avantageusement supérieure à une distance prédéterminée Dₚ pendant sensiblement toute la durée de l'application de la force motrice externe sur l'élément d'entrée 2, et inférieure à ladite distance prédéterminée Dₚ pendant sensiblement toute la durée où la force motrice externe ne s'applique pas sur l'élément d'entrée 2.

De manière préférentielle, la distance entre la zone de transmission d'effort 7 et l'axe de rotation Y-Y' est égale à une première valeur sensiblement constante, pendant tout le temps durant lequel la force motrice externe s'applique sur l'élément d'entrée 2, et est égale à une deuxième valeur inférieure à la première valeur et sensiblement constante, pendant tout le temps durant lequel la force motrice externe ne s'applique pas sur l'élément d'entrée 2.

Avantageusement, lesdits moyens de transmission d'efforts 5, 6 sont formés par un système de came comprenant d'une part un chemin de came 6A qui entoure ledit axe de rotation Y-Y' et d'autre part un suiveur 5A conçu pour se déplacer le long dudit chemin de came 6A en appui contre ce dernier en une zone de contact local correspondant à ladite zone de transmission d'effort 7. De préférence, conformément au mode de réalisation illustré aux figures, ledit système de came est un système de came à transmission axiale capable notamment de transformer une poussée axiale s'exerçant selon un axe de translation en une rotation synchrone, selon un sens de rotation unique, autour dudit axe de translation. Avantageusement, le chemin de came 6A est embarqué sur l'élément de sortie 4, tandis que le suiveur 5A est embarqué sur l'élément d'entrée 2, étant entendu qu'un montage inverse (c'est-à-dire où le chemin de came 6A est embarqué sur l'élément d'entrée 2 et où le suiveur 5A est embarqué sur l'élément de sortie 4) est parfaitement envisageable sans pour autant que l'on sorte du cadre de l'invention.

De préférence, le chemin de came 6A s'étend à 360° autour de l'axe de rotation Y-Y' et se présente sous la forme d'une zone d'appui allongée contre et sur laquelle le suiveur 5A vient en appui d'entraînement. Le suiveur 5A comprend de préférence un ou plusieurs galet(s) 50, 51, 52, 53 conçus pour rouler le long du chemin de came 6A tout en exerçant localement sur ce dernier une pression de transmission d'effort et réciproquement. De préférence, ledit chemin de came 6A comprend au moins un tronçon intérieur 60 et un tronçon extérieur 61 qui s'étendent autour dudit axe de rotation Y-Y' respectivement selon un premier et un deuxième secteur angulaire qui sont de préférence au moins partiellement distincts, ledit tronçon intérieur 60 étant plus proche de l'axe de rotation Y-Y' que ne l'est ledit tronçon extérieur 61. Par exemple, comme illustré aux figures, le tronçon intérieur 60 définit une trajectoire de déplacement pour le suiveur 5A qui s'étend à une distance constante D1 de l'axe de rotation Y-Y', de sorte que la zone de transmission d'effort 7 se déplace le long dudit tronçon intérieur 60 selon une trajectoire dont la projection orthogonale dans un plan P perpendiculaire à l'axe de rotation Y-Y' comprend une ou plusieurs portions 60A, 60B, 60C d'un même cercle de rayon D1 (cf. figure 7).

De la même façon, le tronçon extérieur 61 s'étend, dans le même plan P de projection perpendiculaire à l'axe de rotation Y-Y', selon une ou plusieurs portion(s) 61A, 61B d'un même cercle de rayon D2 (cf. figure 7).

Le recours à un système de came en tant que moyens de transmission d'effort s'avère particulièrement avantageux dans le cadre de l'invention, en permettant de faire varier automatiquement et de façon très simple et particulièrement fiable (par des moyens purement mécaniques) le couple exercé sur l'élément de sortie 4 sans pour autant faire varier la vitesse de rotation dudit élément de sortie 4, qui reste constante et uniforme.

Par exemple, comme illustré à la figure 7, le chemin de came 6A peut comprendre :
- un tronçon intérieur 60 formé en l'espèce par la réunion de trois sous-tronçons, savoir : un premier et un deuxième sous-tronçon intérieur inférieur 60A, 60B qui s'étendent respectivement autour de l'axe de rotation Y-Y' selon un premier sous-secteur angulaire α1 et un deuxième sous-secteur angulaire α2, et un sous-tronçon intérieur supérieur 60C dont la projection orthogonale dans ledit plan P s'étend entre celle du premier sous-tronçon intérieur inférieur et celle du deuxième sous-tronçon inférieur supérieur, ledit sous-tronçon intérieur supérieur 60C s'étendant autour de l'axe de rotation Y-Y' selon un troisième sous-secteur angulaire a3 qui correspond en l'espèce à l'angle séparant lesdits premier et deuxième sous-tronçons intérieurs inférieurs 60A, 60B ;
- un tronçon extérieur 61 formé en l'espèce par la réunion d'un premier sous-tronçon extérieur 61A et d'un deuxième sous-tronçon extérieur 61B s'étendant autour de l'axe de rotation Y-Y' selon respectivement un quatrième sous-secteur angulaire β1 et un cinquième sous-secteur angulaire β2. La mise en œuvre, dans le mode de réalisation illustré aux figures, de deux sous-tronçons extérieurs 61A, 61B (disposés en l'espèce de façon diamétralement opposée relativement à l'axe de rotation Y-Y') découle du fait que dans ce mode de réalisation spécifique, le suiveur 5A comprend deux galets extérieurs 50, 51 diamétralement opposés. Dans le cas où un seul galet est mis en œuvre (ce qui n'est pas forcément idéal sur le plan de l'équilibre du dispositif et de son comportement vibratoire), le tronçon extérieur 61 pourrait n'être formé que par ledit premier sous-tronçon extérieur 61A.

Dans l'exemple illustré aux figures, les premier et deuxième sous-tronçons intérieurs inférieurs 60A, 60B et sous-tronçon intérieur supérieur 60C sont agencés pour que :
- le suiveur 5A puisse exercer sur les premier et deuxième sous-tronçons intérieurs inférieurs 60A, 60B une poussée axiale vers l'extérieur de la chambre de combustion à laquelle est associé le piston (formé en l'espèce par l'élément d'entrée 2), c'est-à-dire une poussée du haut vers le bas dans le référentiel des figures 1 à 4, et que réciproquement chacun desdits premier et deuxième sous-tronçons intérieurs inférieurs 60A, 60B puisse exercer sur le suiveur 5A une poussée axiale vers l'intérieur de la chambre de combustion à laquelle est associé le piston formé en l'espèce par l'élément d'entrée 2, c'est-à-dire une poussée du bas vers le haut dans le référentiel des figures 1 à 4,
- le suiveur 5A puisse exercer sur le sous-tronçon intérieur supérieur 60C une poussée axiale vers l'intérieur de la chambre de combustion à laquelle est associé le piston (formé en l'espèce par l'élément d'entrée 2), c'est-à-dire une poussée du bas vers le haut dans le référentiel des figures 1 à 4, ou que réciproquement le sous-tronçon intérieur supérieur 60C puisse exercer sur le suiveur 5A une poussée axiale vers l'extérieur de la chambre de combustion à laquelle est associé le piston formé en l'espèce par l'élément d'entrée 2, c'est-à-dire une poussée du haut vers le bas dans le référentiel des figures 1 à 4.

De préférence et comme illustré par la figure 7, le tronçon inférieur supérieur 60C couvre le même secteur angulaire que le deuxième sous-tronçon extérieur 61 B, de sorte que le troisième sous-secteur angulaire a3 est sensiblement identique en l'espèce au cinquième sous-secteur angulaire β2.

Quant au tronçon extérieur 61, il est en l'espèce agencé pour que le suiveur 5A puisse exercer sur lui une poussée axiale vers l'extérieur de la chambre de combustion à laquelle est associé le piston (formé en l'espèce par l'élément d'entrée 2), c'est-à-dire une poussée du haut vers le bas dans le référentiel des figures 1 à 4.

Le suiveur 5A est ainsi conçu pour que la zone de transmission d'effort 7, qui en pratique correspond à la zone d'appui local entre le suiveur 5A et le chemin de came 6A, se déplace le long du premier sous-tronçon intérieur inférieur 60A, puis le long du sous-tronçon intérieur supérieur 60C, puis le long du deuxième sous-tronçon intérieur inférieur 60B, puis le long du premier sous-tronçon extérieur 61A, et ainsi de suite.

Dans l'exemple illustré aux figures, le tronçon intérieur 60 est avantageusement formé par une gorge ondulée (par exemple sinusoïdale) ménagée à 360° à la surface d'un arbre cylindrique formant ledit élément de sortie 4, le bord inférieur de la gorge formant lesdits premier et deuxième sous-tronçons intérieurs inférieurs 60A, 60B tandis que le bord supérieur de la gorge forme le tronçon intérieur supérieur 60C.

De préférence, afin de faciliter le passage du tronçon extérieur 61 au tronçon intérieur 60, lesdits tronçons 60, 61 se recouvrent légèrement au niveau de leurs extrémités respectives, de sorte qu'au niveau desdites extrémités, ledit suiveur 5A est brièvement en contact avec à la fois l'extrémité concernée du tronçon extérieur et l'extrémité concernée du tronçon intérieur.

Le suiveur 5A est avantageusement conçu pour se déplacer le long dudit tronçon extérieur 61, en appui contre ce dernier, lorsque ladite force motrice externe s'exerce sur l'élément d'entrée 2, et pour se déplacer le long dudit tronçon intérieur 60, en appui contre ce dernier, lorsque ladite force motrice externe ne s'exerce pas sur ledit élément d'entrée 2.

Ainsi, lorsque la force motrice externe s'exerce sur l'élément d'entrée 2, la zone de transmission d'effort 7 circule le long du tronçon extérieur 61, à une distance D2 de l'axe de rotation Y-Y', de sorte que la composante tangentielle de l'effort transmis au niveau de la zone de transmission d'effort 7 produit un couple égal au produit de cette composante tangentielle et de la distance D2. Au contraire, lorsque la force motrice externe ne s'exerce pas sur l'élément d'entrée 2, qui ne se déplace alors que par inertie grâce à l'énergie cinétique acquise lorsque la force motrice externe s'exerçait sur lui, la zone de transmission d'effort 7 se déplace le long du tronçon intérieur 60, auquel cas la consommation énergétique est minimisée puisque le couple lui-même est minimisé, en raison du fait que la distance D1 est inférieure à la distance D2, par exemple représentant de préférence 75%, ou de façon encore plus préférentielle 50%, voire même 25 % de la distance D1.

De façon préférentielle, lorsque le galet extérieur 50 est en contact avec le tronçon extérieur 61, le galet intérieur 52 n'est pas en contact avec le tronçon intérieur 61. De même, lorsque le galet intérieur 52 est en contact avec le tronçon intérieur 61, le galet extérieur 50 n'est pas en contact avec le tronçon extérieur 61. Grâce à cette mesure technique, les frottements sont diminués, ce qui permet d'optimiser le rendement.

Avantageusement, le suiveur 5A comprend d'une part un poussoir interne 500 positionné pour pouvoir se déplacer le long dudit tronçon intérieur 60, en appui contre ce dernier, et d'autre part un poussoir externe 501 positionné pour pouvoir se déplacer le long dudit tronçon extérieur 61, en appui contre ce dernier. Dans ce mode de réalisation (illustré aux figures), le suiveur 5A est ainsi pourvu de deux poussoirs 500, 501 disposés à des distances différentes de l'axe de rotation Y-Y' de façon à pouvoir coopérer respectivement avec lesdits tronçons intérieur et extérieur 60, 61.

Bien entendu, comme illustré aux figures, les tronçons intérieur et extérieur 60, 61 sont conçus pour que lorsque le poussoir externe 501 (qui comprend par exemple au moins un, et de préférence deux galets extérieurs 50, 51 disposés de manière diamétralement opposée relativement à l'axe de rotation Y-Y') se déplace le long dudit tronçon extérieur 61, en appui contre ce dernier, le poussoir interne 500 (formé par exemple par au moins un, et de préférence par deux galets intérieurs 52, 53 disposés eux aussi de façon diamétralement opposée relativement à l'axe de rotation Y-Y', co-axialement aux galets 50, 51 formant le poussoir externe 501), ne vienne pas en appui contre ledit tronçon intérieur 60, et pour que lorsque le poussoir interne 500 se déplace le long dudit tronçon intérieur 60, en appui contre ce dernier, le poussoir externe 501 ne vienne pas en appui contre le tronçon extérieur 61. Ainsi, comme illustré à la figure 7, les galets extérieurs 50, 51 du poussoir externe 501 se déplacent simultanément le long respectivement du premier sous-tronçon 61A et du deuxième sous-tronçon 61B, entre respectivement l'extrémité 610A et l'extrémité 611A du sous-tronçon 61A (pour le galet 50) et entre l'extrémité 611B et l'extrémité 610B du sous-tronçon 61B (pour le galet 51).

Puis, lorsque les galets extérieurs 50, 51 passent au-delà respectivement de l'extrémité 611A et de l'extrémité 610B, les galets intérieurs 52, 53 du poussoir interne 500 prennent le relais et viennent se déplacer simultanément le long du tronçon intérieur 60, en appui contre ce dernier. Pendant la course des galets extérieurs 50, 51 du poussoir externe 501 le long des sous-tronçons extérieurs 61A, 61B, les galets intérieurs 52, 53 du poussoir interne 500 ne viennent pas en appui de transmission de force contre le chemin de came 6A. Réciproquement, lorsque les galets intérieurs 52, 53 du poussoir interne 500 circulent en appui de transmission de force contre respectivement le premier sous-tronçon intérieur inférieur 60A et le deuxième sous-tronçon intérieur inférieur 60B, les galets extérieurs 50, 51 du poussoir externe 501 ne viennent pas en appui de transmission de force contre le chemin de came 6A.

L'invention permet ainsi, dans ce mode de réalisation particulièrement avantageux, de faire évoluer automatiquement le système de came entre deux configurations, l'une particulièrement adaptée au temps moteur, permettant de procurer un couple maximal, et l'autre particulièrement adaptée aux temps non moteur (par exemple : admission, compression, échappement) permettant la minimisation de la consommation énergétique.

Avantageusement, les moyens de transmission d'effort équipant respectivement les éléments d'entrée 2 et de sortie 4 interagissent mécaniquement en la zone de transmission d'effort 7 pour également transformer le déplacement à rotation continue de l'élément de sortie 4 en déplacement alternatif de l'élément d'entrée 2, ce qui permet, comme cela est bien connu en tant que tel dans les moteurs à explosion, de provoquer le déplacement du piston (formant avantageusement l'élément d'entrée 2), y compris lors des phases non motrices (c'est-à-dire lorsque la force motrice externe produite par la phase de combustion-détente ne s'applique pas sur l'élément d'entrée 2, dont le déplacement résulte alors uniquement de l'inertie dudit élément d'entrée 2 et de l'élément de sortie 4).

Bien entendu, l'invention n'est absolument pas limitée à la mise en œuvre d'un système de came pour former lesdits moyens de transmission d'effort 5, 6.

Il est par exemple parfaitement envisageable de recourir, à la place d'un système de came, à un système de biellettes formées par un bras de longueur variable s'étendant entre une première extrémité montée à pivotement sur l'élément d'entrée 2 et une deuxième extrémité montée à pivotement sur l'élément de sortie 4 en un point correspondant à la zone de transmission d'effort 7 et dont la position est variable, par exemple au moyen d'une glissière. A titre alternatif, il pourrait également être envisageable de recourir à des moyens de transmission d'effort 5, 6 formés par différentes roues dentées qui engrènent pour assurer la transmission d'effort entre l'élément d'entrée 2 et l'élément de sortie 4. Par exemple, l'élément d'entrée 2 pourrait porter une première roue dentée tandis que l'élément de sortie 4 pourrait porter deux roues dentées de diamètres différents qui engrènent alternativement avec la première roue dentée de façon à faire varier la distance entre la zone de transmission d'effort (qui correspond à la zone où les roues dentées engrènent) et l'axe de rotation Y-Y' de l'élément de sortie 4.

De plus, dans le cas préférentiel où les moyens de transmission d'effort 5, 6 sont formés par un système de came comme exposé dans ce qui précède, le recours à un poussoir interne 500 et à un poussoir externe 501 n'est bien entendu absolument pas obligatoire. Il pourrait être par exemple envisageable, sans pour autant que l'on sorte du cadre de l'invention, que le suiveur 5A soit formé par un unique poussoir monté mobile de façon à pouvoir passer d'une première position lui permettant de coopérer avec le tronçon intérieur 60, à une deuxième position lui permettant de coopérer avec le tronçon extérieur 61, le passage d'une position à l'autre étant par exemple commandé par un actionneur (qui peut être électrique, mécanique, magnétique, etc.). Enfin, le recours à des paires de galets (intérieures 52, 53 et extérieures 50, 51) n'est bien entendu absolument pas obligatoire, deux galets (l'un intérieur et l'autre extérieur) pouvant suffire, même s'il est préférable, pour des raisons d'équilibrage et de tenue mécanique, d'utiliser des paires de galets pour le tronçon intérieur 60 et le tronçon extérieur 61.

Afin de procurer l'effet de came recherché, le chemin de came 6A présente bien entendu un caractère sinueux, avec une altitude qui varie selon la direction axiale matérialisée par l'axe Y-Y'. Le chemin de came 6A forme ainsi une ou plusieurs rampes qui permettent de produire, sous l'effet de la poussée exercée contre la rampe en question par le suiveur 5A, une force avec au moins une composante tangentielle engendrant la rotation de l'élément de sortie 4. Inversement, cette forme de rampe permet avantageusement de convertir la rotation de l'élément de sortie 4 en déplacement axial de l'élément d'entrée 2.

A cette fin, comme illustré sur la figure 5, le tronçon extérieur 61 comporte par exemple au moins une rampe descendante extérieure 61X qui s'étend entre un point haut correspondant à la première extrémité 610A du premier sous-tronçon extérieur 61A et un point bas correspondant à la deuxième extrémité 611A du premier sous-tronçon extérieur 61A.

Le tronçon intérieur 60 comporte quant à lui au moins :
- une première rampe montante 60X formée par le premier sous-tronçon intérieur inférieur 60A, ladite première rampe montante 60X s'étendant entre un point bas correspondant à la première extrémité 600A du premier sous-tronçon intérieur inférieur 60A et un point haut correspondant à la deuxième extrémité 601A dudit premier sous-tronçon intérieur inférieur 60A ;
- une deuxième rampe descendante 60Y formée par le sous-tronçon intérieur supérieur 60C, ladite deuxième rampe descendante 60Y s'étendant entre un point haut correspondant à la deuxième extrémité 601A du premier sous-tronçon intérieur inférieur 60A et un point bas correspondant à la première extrémité 601 B dudit deuxième sous-tronçon intérieur inférieur 60B ;
- une deuxième rampe montante 60Z formée par le deuxième sous-tronçon intérieur inférieur 60B, ladite deuxième rampe montante 60Z s'étendant entre un point bas correspondant à la première extrémité 600B du deuxième sous-tronçon intérieur inférieur 60B et un point haut correspondant à la deuxième extrémité 601B dudit deuxième sous-tronçon intérieur inférieur 60B ;

Comme exposé auparavant, le point bas 611A de la rampe descendante 61X est situé sensiblement au niveau du point bas 600A de la première rampe montante 60X, avec un léger recouvrement angulaire des deux rampes 61X, 60X en question, afin de faciliter le passage d'un tronçon à l'autre.

L'invention concerne bien entendu en tant que telle un moteur thermique incluant un dispositif 1 de transformation conforme à la description qui précède, ledit moteur thermique fonctionnant de préférence selon un cycle à quatre temps, étant entendu que l'invention n'est aucunement limitée, comme déjà exposé dans ce qui précède, à un cycle à quatre temps (un cycle à deux temps peut par exemple être envisagé), ni même à un moteur à piston.

L'invention concerne également un véhicule équipé d'un tel moteur thermique incluant le dispositif 1, quelle que soit la nature de ce véhicule (véhicule terrestre à une, deux, trois ou quatre roues par exemple, véhicule terrestre à chenilles, aéronef de type avion ou hélicoptère par exemple, navire, etc.).

L'invention concerne enfin un procédé de transformation d'un mouvement alternatif en mouvement de rotation, qui est de préférence mis en œuvre à l'aide du dispositif 1 de transformation décrit dans ce qui précède. Dès lors, l'ensemble des éléments de description exposés dans ce qui précède en relation avec le dispositif 1 de transformation reste également valable, *mutatis mutandis,* pour le procédé selon l'invention, dans lequel un élément d'entrée 2 et un élément de sortie 4 se déplacent, sous l'effet de l'exercice intermittent d'une force motrice externe sur ledit élément d'entrée 2, selon respectivement un mouvement alternatif et un mouvement de rotation.

Conformément au procédé selon l'invention, les éléments d'entrée 2 et de sortie 4 sont pourvus de moyens de transmission d'efforts respectifs interagissant mécaniquement en une zone de transmission d'effort 7 pour au moins transformer le déplacement alternatif dudit élément d'entrée 2 en rotation continué dudit élément de sortie 4 selon un axe de rotation Y-Y' et réciproquement. Selon le procédé en question, la distance entre ledit axe de rotation Y-Y' et ladite zone de transmission d'effort 7 varie automatiquement de façon à être plus importante (valeur D2) lorsque ladite force motrice externe s'exerce sur ledit élément d'entrée 2 que lorsque ladite force motrice externe ne s'exerce pas sur ledit élément d'entrée 2 (auquel cas la valeur de la distance est D1). Avantageusement, les moyens de transmission d'efforts sont formés par un système de came, et de préférence un système de came à transmission axiale, comprenant d'une part un chemin de came 6A qui entoure l'axe de rotation Y-Y' et d'autre part un suiveur 5A conçu pour se déplacer le long dudit chemin de came 6A en appui contre ce dernier en une zone de contact local correspondant à ladite zone de transmission d'effort 7. Bien entendu, tout comme le dispositif 1 de transformation décrit ci-avant, le procédé selon l'invention n'est pas non plus limité à la mise en œuvre d'un système de came, en particulier à transmission axiale, et pourrait également être mis en œuvre, de façon alternative, au moyen d'une biellette ou d'un système d'engrenage par exemple, comme évoqué précédemment.

Un exemple de fonctionnement du dispositif 1 illustré aux figures va maintenant être décrit. Comme évoqué précédemment, le dispositif 1 illustré aux figures est mis en œuvre au sein d'un moteur thermique à quatre temps, l'élément d'entrée 2 formant un piston tandis que l'élément de sortie 4 forme, ou est relié à, un arbre récepteur destiné à entraîner par exemple les roues d'un véhicule au sein duquel est monté le moteur thermique à quatre temps en question.

La figure 1 illustre le dispositif 1 de transformation selon l'invention au moment où le temps moteur débute, c'est-à-dire à l'instant où les gaz (mélange d'air et de carburant) présents dans la chambre de combustion délimitée par le piston formé par l'élément d'entrée 2 sont enflammés.

A cet instant, le suiveur 5A, et notamment le galet extérieur 50, est en appui contre le tronçon extérieur 61. Plus précisément, le galet extérieur 50 se trouve au sommet de la rampe 61X, en appui contre cette dernière, tandis que le galet intérieur 52 monté coaxialement audit galet extérieur 50 n'est quant à lui pas en contact avec le tronçon intérieur 60 mais est disposé au-dessus et à distance de ce dernier, de façon à ce qu'il n'existe pas de coopération de force entre le galet intérieur 52 et le chemin de came 6A.

Sous l'effet de l'inflammation susvisée (générée par exemple par une étincelle produite par une bougie ou par un phénomène d'auto-inflammation en réponse à un niveau prédéterminé de compression), les gaz se détendent et repoussent le piston formé par l'élément d'entrée 2 vers le bas (dans le référentiel des figures 1 à 4). Ce mouvement de descente du piston est bien entendu directement répercuté sur le premier galet extérieur 50 qui exerce à son tour une poussée sur la rampe 61X tout en roulant le long de cette dernière, occasionnant ainsi une rotation de l'élément de sortie 4 pendant laquelle la rampe descendante extérieure 61X se déplace relativement au premier galet extérieur 50 jusqu'à ce que ce dernier se trouve sensiblement au niveau du point bas 611A.

A cet instant, le temps moteur est terminé et le dispositif 1 se trouve dans la configuration illustrée par la figure 2. Dans cette configuration de la figure 2, le premier galet intérieur 52, qui n'était jusqu'à présent pas en contact avec le chemin de came 6A, entre en contact de transmission de force avec le tronçon intérieur 60, au niveau du point bas 600A.

L'élément d'entrée 2 et l'élément de sortie 4 poursuivent alors leur course relative, sous l'effet de l'inertie de l'élément de sortie 4 (le temps moteur étant terminé), de sorte que le premier galet extérieur 50 n'est plus en contact avec le chemin de came 6A (cf. figure 3) tandis que le premier galet intérieur 52 roule le long de la première rampe montante 60X formée par le premier sous-tronçon intérieur inférieur 60A (comme illustré à la figure 4), ce qui occasionne une poussée ascendante du sous-tronçon intérieur inférieur 60A sur le premier galet intérieur 52 résultant en une remontée du piston. Cette phase de remontée du piston correspond à la phase d'échappement du cycle à quatre temps.

Toujours sous l'effet de l'inertie uniquement, l'élément d'entrée 2 et l'élément de sortie 4 poursuivent leur course relative, ce qui a pour effet de faire interagir le premier galet intérieur 52 avec le sous-tronçon intérieur supérieur 60C. Le premier galet intérieur 52 roule ainsi le long du profil de rampe du sous-tronçon intérieur supérieur 60C, lequel exerce sur ledit galet 52 une poussée vers le bas (dans le référentiel des figures) qui tire le piston (*i.e.* l'élément d'entrée 2) en l'éloignant de son point mort haut. Cette course descendante du piston correspond à la phase d'admission. Pendant cette phase d'admission, le premier galet extérieur 50 n'appuie pas contre le tronçon extérieur 61.

A l'issue de la phase d'admission, le premier galet intérieur 52 se trouve au niveau de la première extrémité 600B du deuxième sous-tronçon intérieur inférieur, et progresse ensuite en appui le long de la rampe ascendante formée par ce dernier, ce qui a pour effet de faire repousser le piston en direction de son point mort haut, réalisant de ce fait une compression des gaz présent dans la chambre. Bien entendu, pendant cette phase de compression le premier galet extérieur 50 ne coopère pas en transmission de force avec le chemin de came 6A.

A l'issue de cette phase de compression, le dispositif 1 se retrouve dans la configuration illustrée à la figure 1 et le cycle peut alors recommencer et se perpétuer ainsi tant que le moteur est en fonctionnement.

Ainsi, dans la variante préférentielle illustrée aux figures, il n'existe une coopération de force entre le poussoir externe 501 et le tronçon extérieur 61 que lors du temps moteur.

Pendant les autres temps (échappement, admission et compression), le poussoir externe 501 n'est plus en appui contre le chemin de came 6A et seul le poussoir interne 500 coopère avec ledit chemin de came 6A, et plus précisément avec le tronçon intérieur 60.

Dans ce la description de fonctionnement ci-avant, il a été fait référence uniquement à la paire de galets 50, 52, étant entendu que lorsqu'une autre paire de galets 51, 53 symétrique est également mise en œuvre, le chemin de came 6A présente lui aussi un caractère symétrique.

L'invention permet ainsi un fonctionnement optimal du moteur en permettant à ce dernier de délivrer un couple plus important pendant le temps moteur et de consommer moins d'énergie cinétique pendant les autres temps non moteurs (échappement, admission et compression), et ce à cylindrée et vitesse du piston égales et sans modification de la chambre de combustion.

### POSSIBILITE D'APPLICATION INDUSTRIELLE

L'invention trouve son application industrielle dans la conception, la fabrication et la mise en œuvre de dispositifs de transformation d'un mouvement alternatif en un mouvement de rotation.

## Revendications

1. Dispositif (1) de transformation d'un mouvement alternatif en un mouvement de rotation comprenant un élément d'entrée (2) et un élément de sortie (4) conçus pour se déplacer, sous l'effet de l'exercice intermittent d'une force motrice externe sur ledit élément d'entrée, selon respectivement un mouvement alternatif et un mouvement de rotation, lesdits éléments d'entrée et de sortie étant pourvus de moyens de transmission d'effort respectifs (5, 6) interagissant mécaniquement en une zone de transmission d'effort (7) pour au moins transformer le déplacement alternatif dudit élément d'entrée (2) en rotation continue dudit élément de sortie (4) selon un axe de rotation (Y-Y'), ledit dispositif (1) étant **caractérisé en ce qu'**il est conçu pour que la distance entre ledit axe de rotation (Y-Y') et ladite zone de transmission d'effort (7) varie automatiquement de façon à être plus importante lorsque ladite force motrice externe s'exerce sur ledit élément d'entrée (2) que lorsque ladite force motrice externe ne s'exerce pas sur ledit élément d'entrée (2).

2. Dispositif (1) selon la revendication 1 **caractérisé en ce que** lesdits moyens de transmission d'effort (5, 6) sont formés par un système de came comprenant d'une part un chemin de came (6A) qui entoure ledit axe de rotation (Y-Y') et d'autre part un suiveur (5A) conçu pour se déplacer le long dudit chemin de came (6A) en appui contre ce dernier en une zone de contact local correspondant à ladite zone de transmission d'effort (7).

3. Dispositif (1) selon la revendication 2 **caractérisé en ce que** ledit chemin de came (6A) comprend au moins des tronçons intérieur et extérieur (60, 61) qui s'étendent autour dudit axe de rotation (Y-Y'), ledit tronçon intérieur (60) étant plus proche de l'axe de rotation (Y-Y') que ne l'est ledit tronçon extérieur (61), ledit suiveur (5A) étant conçu pour se déplacer le long dudit extérieur tronçon (61), en appui contre ce dernier, lorsque ladite force motrice externe s'exerce sur ledit élément d'entrée (2), et pour se déplacer le long dudit tronçon intérieur (60), en appui contre ce dernier, lorsque ladite force motrice externe ne s'exerce pas sur ledit élément d'entrée (2).

4. Dispositif (1) selon la revendication 3 **caractérisé en ce que** ledit suiveur (5A) comprend d'une part un poussoir interne (500) positionné pour pouvoir se déplacer le long dudit tronçon intérieur (60), en appui contre ce dernier, et d'autre part un poussoir externe (501) positionné pour pouvoir se déplacer le long dudit tronçon extérieur (61), en appui contre ce dernier, lesdits tronçons intérieur et extérieur (60, 61) étant conçus pour que lorsque le poussoir externe (501) se déplace le long dudit tronçon extérieur (61), en appui contre ce dernier, le poussoir interne (500) ne vienne pas en appui contre ledit tronçon intérieur (60), et pour que lorsque le poussoir interne (500) se déplace le long dudit tronçon intérieur (60), en appui contre ce dernier, le poussoir externe (501) ne vienne pas en appui contre ledit tronçon extérieur (61).

5. Dispositif (1) selon l'une des revendications 2 à 4 **caractérisé en ce que** le chemin de came (6A) est embarqué sur l'élément de sortie (4), tandis que le suiveur (5A) est embarqué sur l'élément d'entrée (2).

6. Dispositif (1) selon l'une des revendications précédentes **caractérisé en ce que** ledit élément de sortie est conçu pour tourner sur lui-même selon ledit axe de rotation (Y-Y').

7. Dispositif (1) selon l'une des revendications précédentes **caractérisé en ce que** ledit élément d'entrée (2) est conçu pour se déplacer selon un mouvement de va-et-vient rectiligne parallèlement à un axe de translation (X-X').

8. Dispositif (1) selon la revendication 7 **caractérisé en ce que** lesdits axe de rotation (Y-Y') et axe de translation (X-X') sont sensiblement parallèles, et de préférence sensiblement confondus.

9. Dispositif (1) selon l'une des revendications 1 à 8 **caractérisé en ce que** ledit élément d'entrée (2) est formé par un piston contribuant à délimiter une chambre de combustion d'un moteur thermique au sein de laquelle a lieu une combustion cyclique d'un fluide de travail, ledit exercice intermittent de ladite force motrice externe résultant de ladite combustion cyclique, ledit moteur thermique étant en outre pourvu d'un arbre récepteur formant ledit élément de sortie (4).

10. Moteur thermique incluant un dispositif (1) selon la revendication 9, ledit moteur thermique fonctionnant de préférence selon un cycle à quatre temps.

11. Véhicule équipé d'un moteur thermique conforme à l'objet de la revendication 10.

12. Procédé de transformation d'un mouvement alternatif en mouvement de rotation dans lequel un élément d'entrée (2) et un élément de sortie (4) se déplacent, sous l'effet de l'exercice intermittent d'une force motrice externe sur ledit élément d'entrée, selon respectivement un mouvement alternatif et un mouvement de rotation, lesdits éléments d'entrée (2) et de sortie (4) étant pourvus de moyens de transmission d'effort respectifs interagissant mécaniquement en une zone de transmission d'effort (7) pour au moins transformer le déplacement alternatif dudit élément d'entrée (2) en rotation continue dudit élément de sortie (4) selon un axe de rotation (Y-Y'), ledit procédé étant **caractérisé en ce que** la distance entre ledit axe de rotation (Y-Y') et ladite zone de transmission d'effort (7) varie automatiquement de façon à être plus importante lorsque ladite force motrice externe s'exerce sur ledit élément d'entrée (2) que lorsque ladite force motrice externe ne s'exerce pas sur ledit élément d'entrée (2).

13. Procédé selon la revendication 12 **caractérisé en ce que** lesdits moyens de transmission d'effort sont formés par un système de came comprenant d'une part un chemin de came (6A) qui entoure ledit axe de rotation (Y-Y') et d'autre part un suiveur (5A) conçu pour se déplacer le long dudit chemin de came (6A) en appui contre ce dernier en une zone de contact local correspondant à ladite zone de transmission d'effort (7).

## Patentansprüche

1. Vorrichtung (1) zum Umwandeln einer Wechselbewegung in eine Rotationsbewegung, die ein Eingangselement (2) und ein Ausgangselement (4) umfasst, die ausgelegt sind, um sich unter der Einwirkung der intermittierenden Ausübung einer externen Antriebskraft auf dem Eingangselement jeweils gemäß einer Wechselbewegung und einer Rotationsbewegung zu bewegen, wobei das Eingangs- und das Ausgangselement mit jeweiligen Kraftübertragungsmitteln (5, 6) versehen sind, die mechanisch in einer Kraftübertragungszone (7) in Wechselwirkung treten, um mindestens die Wechselbewegung des Eingangselements (2) in kontinuierliche Rotation des Ausgangselements (4) entlang einer Rotationsachse (Y-Y') umzuwandeln, wobei die Vorrichtung (1) **dadurch gekennzeichnet ist, dass** sie ausgelegt ist, den Abstand zwischen der Rotationsachse (Y-Y') und der Kraftübertragungszone (7) automatisch derart zu variieren, dass er größer ist, wenn die externe Antriebskraft auf das Eingangselement (2) ausgeübt wird, als wenn die externe Antriebskraft nicht auf das Eingangselement (2) ausgeübt wird.

2. Vorrichtung (1) nach Anspruch 1, **dadurch gekennzeichnet, dass** die Kraftübertragungsmittel (5, 6) aus einem Nockensystem gebildet sind, das einerseits eine Kurvenbahn (6A) umfasst, die die Rotationsachse (Y-Y') umgibt, und andererseits einen Nockenfolger (5A), der ausgelegt ist, um sich entlang der Kurvenbahn (6A) in Anlage gegen diese Letztere in einer lokalen Kontaktzone zu bewegen, die der Kraftübertragungszone (7) entspricht.

3. Vorrichtung (1) nach Anspruch 2, **dadurch gekennzeichnet, dass** die Kurvenbahn (6A) mindestens Innen- und Außenabschnitte (60, 61) umfasst, die sich um die Rotationsachse (Y-Y') erstrecken, wobei der Innenabschnitt (60) der Rotationsachse (Y-Y') näher ist als der Außenabschnitt (61), wobei der Nockenfolger (5A) ausgelegt ist, um sich entlang des Außenabschnitts (61) in Anlage gegen diesen Letzteren zu bewegen, wenn die externe Antriebskraft auf das Eingangselement (2) ausgeübt wird, und um sich entlang des Innenabschnitts (60) in Anlage gegen diesen Letzteren zu bewegen, wenn die externe Antriebskraft nicht auf das Eingangselement (2) ausgeübt wird.

4. Vorrichtung (1) nach Anspruch 3, **dadurch gekennzeichnet, dass** der Nockenfolger (5A) einerseits einen Innenstößel (500) umfasst, der positioniert ist, um sich entlang des Innenabschnitts (60) in Anlage gegen diesen Letzteren bewegen zu können, und andererseits einen Außenstößel (501), der positioniert ist, um sich entlang des Außenabschnitts (61) in Anlage gegen diesen Letzteren bewegen zu können, wobei der Innenabschnitt und der Außenabschnitt (60, 61) so ausgelegt sind, dass, wenn sich der Außenstößel (501) entlang des Außenabschnitts (61) in Anlage gegen diesen Letzteren bewegt, der Innenstößel (500) nicht in Anlage gegen den Innenabschnitt (60) kommt, und dass, wenn sich der Innenstößel (500) entlang des Innenabschnitts (60) in Anlage gegen diesen Letzteren bewegt, der Außenstößel (501) nicht gegen den Außenabschnitt (61) in Anlage kommt.

5. Vorrichtung (1) nach einem der Ansprüche 2 bis 4, **dadurch gekennzeichnet, dass** die Kurvenbahn (6A) auf dem Ausgangselement (4) mitgeführt wird, während der Nockenfolger (5A) auf dem Eingangselement (2) mitgeführt wird.

6. Vorrichtung (1) nach einem der vorstehenden Ansprüche, **dadurch gekennzeichnet, dass** das Ausgangselement ausgelegt ist, um entlang der Rotationsachse (Y-Y') um sich selbst zu drehen.

7. Vorrichtung (1) nach einem der vorstehenden Ansprüche, **dadurch gekennzeichnet, dass** das Eingangselement (2) ausgelegt ist, um sich entlang einer geradlinigen Wechselbewegung parallel zu einer Translationsachse (X-X') zu bewegen.

8. Vorrichtung (1) nach Anspruch 7, **dadurch gekennzeichnet, dass** die Rotationsachse (Y-Y') und die Translationsachse (X-X') im Wesentlichen parallel sind und vorzugsweise im Wesentlichen zusammenfallen.

9. Vorrichtung (1) nach einem der Ansprüche 1 bis 8, **dadurch gekennzeichnet, dass** das Eingangselement (2) aus einem Kolben gebildet ist, der dazu beiträgt, eine Brennkammer eines Verbrennungsmotors abzugrenzen, in dessen Innerem eine zyklische Verbrennung eines Arbeitsfluids stattfindet, wobei das intermittierende Ausüben der externen Antriebskraft aus der zyklischen Verbrennung resultiert, wobei der Verbrennungsmotor außerdem mit einer Abtriebswelle versehen ist, die das Ausgangselement (4) bildet.

10. Verbrennungsmotor, der eine Vorrichtung (1) nach Anspruch 9 beinhaltet, wobei der Verbrennungsmotor vorzugsweise gemäß einem Viertaktzyklus funktioniert.

11. Fahrzeug, das mit einem Verbrennungsmotor gemäß dem Gegenstand des Anspruchs 10 versehen ist.

12. Verfahren zum Umwandeln einer Wechselbewegung in Rotationsbewegung, wobei sich ein Eingangselement (2) und ein Ausgangselement (4) unter der Wirkung der intermittierenden Ausübung einer externen Antriebskraft auf dem Eingangselement jeweils gemäß einer Wechselbewegung und einer Rotationsbewegung bewegen, wobei das Eingangselement (2) und das Ausgangselement (4) mit jeweiligen Kraftübertragungsmitteln versehen sind, die mechanisch in einer Kraftübertragungszone (7) in Wechselwirkung stehen, um mindestens die Wechselbewegung des Eingangselements (2) in kontinuierliche Rotation des Ausgangselements (4) entlang einer Rotationsachse (Y-Y') umzuwandeln, wobei das Verfahren **dadurch gekennzeichnet ist, dass** der Abstand zwischen der Rotationsachse (Y-Y') und der Kraftübertragungszone (7) automatisch derart variiert, dass er größer ist, wenn die externe Antriebskraft auf das Eingangselement (2) ausgeübt wird, als wenn die externe Antriebskraft nicht auf das Eingangselement (2) ausgeübt wird.

13. Verfahren nach Anspruch 12, **dadurch gekennzeichnet, dass** die Kraftübertragungsmittel aus einem Nockensystem gebildet sind, das einerseits eine Kurvenbahn (6A) umfasst, die die Rotationsachse (Y-Y') umgibt, und andererseits einen Nockenfolger (5A), der ausgebildet ist, um sich entlang der Kurvenbahn (6A) in Anlage gegen diese Letztere in einer lokalen Kontaktzone, die der Kraftübertragungszone (7) entspricht, zu bewegen.

## Claims

1. A device (1) for converting a reciprocating motion into a rotary motion comprising an input element (2) and an output element (4) designed to move, under the effect of the intermittent application of an external drive force to said input element, according to a reciprocating motion and a rotary motion, respectively, said input and output elements being provided with respective effort transmission means (5, 6) mechanically interacting in an effort transmission area (7) to at least convert the reciprocating movement of said input element (2) into a continuous rotation of said output element (4) according to an axis of rotation (Y-Y'), said device (1) being **characterized in that** it is designed so that the distance between said axis of rotation (Y-Y') and said effort transmission area (7) varies automatically so as to be greater when said external drive force is exerted on said input element (2) than when said external drive force is not exerted on said input element (2).

2. The device (1) according to claim 1, **characterized in that** said effort transmission means (5, 6) are formed by a cam system comprising on the one hand a cam race (6A) that surrounds said axis of rotation (Y-Y') and on the other hand a follower (5A) designed to move along said cam race (6A) in rest against the latter in a local contact area corresponding to said effort transmission area (7).

3. The device (1) according to claim 2, **characterized in that** said cam race (6A) comprises at least internal and external segments (60, 61) that extend about the axis of rotation (Y-Y'), said internal segment (60) being closer to the axis of rotation (Y-Y') than said external segment (61) is, said follower (5A) being designed to move along said external segment (61), in rest against the latter, when said external drive force is exerted on said input element (2), and to move along said internal segment (60), in rest against the latter, when said external drive force is not exerted on said input element (2).

4. The device (1) according to claim 3, **characterized in that** said follower (5A) comprises, on the one hand, an internal pusher (500) positioned so as to be able to move along said internal segment (60), in rest against the latter, and on the other hand, an external pusher (501) positioned so as to be able to move along said external segment (61), in rest against the latter, said internal and external segments (60, 61) being designed so that, when the external pusher (501) moves along said external segment (61), in rest against the latter, the internal pusher (500) does not come in rest against said internal segment (60), and so that, when the internal pusher (500) moves along said internal segment (60), in rest against the latter, the external pusher (501) does not come in rest against the external segment (61).

5. The device (1) according to one of claims 2 to 4, **characterized in that** the cam race (6A) is integrated on the output element (4), whereas the follower (5A) is integrated on the input element (2).

6. The device (1) according to any one of the preceding claims, **characterized in that** said output element is designed to turn over itself about said axis of rotation (Y-Y').

7. The device (1) according to any one of the preceding claims, **characterized in that** said input element (2) is designed to move according to a rectilinear reciprocating motion parallel to an axis of translation (X-X').

8. The device (1) according to claim 7, **characterized in that** said axis of rotation (Y-Y') and axis or translation (X-X') are substantially parallel, and preferably substantially merged together.

9. The device (1) according to one of claims 1 to 8, **characterized in that** said input element (2) is formed by a piston contributing to delimit a combustion chamber of a heat engine within which occurs a cyclic combustion of a working fluid, said intermittent application of said external drive force resulting from said cyclic combustion, said heat engine being moreover provided with a driven shaft forming said output element (4).

10. A heat engine including a device (1) according to claim 9, said heat engine operating preferably according to a four-stroke cycle.

11. A vehicle equipped with a heat engine according to the object of claim 10.

12. A method for converting a reciprocating motion into a rotary motion, in which an input element (2) and an output element (4) move, under the effect of the intermittent application of an external drive force to said input element, according to a reciprocating motion and a rotary motion, respectively, said input (2) and output (4) elements being provided with respective effort transmission means mechanically interacting in an effort transmission area (7) to at least convert the reciprocating movement of said input element (2) into a continuous rotation of said output element (4) according to an axis of rotation (Y-Y'), said method being **characterized in that** the distance between said axis of rotation (Y-Y') and said effort transmission area (7) varies automatically so as to be greater when said external drive force is exerted on said input element (2) than when said external drive force is not exerted on said input element (2).

13. The method according to claim 12, **characterized in that** said effort transmission means are formed by a cam system comprising on the one hand a cam race (6A) that surrounds said axis of rotation (Y-Y') and on the other hand a follower (5A) designed to move along said cam race (6A) in rest against the latter in a local contact area corresponding to said effort transmission area (7).
